# EUROPÄISCHE PATENTSCHRIFT

(11) **EP 2 446 206 B1**
(45) Veröffentlichungstag und Bekanntmachung des Hinweises auf die Patenterteilung: **01.05.2013**
(21) Anmeldenummer: 10724853.6
(22) Anmeldetag: 14.06.2010
(51) Int. Cl.: B29C 53/06, F25D 23/06

(54) **HAUSHALTSKÄLTEGERÄT MIT EINEM KUNSTSTOFFBAUTEIL**
DOMESTIC REFRIGERATING APPLIANCE WITH A PLASTIC COMPONENT
APPAREIL FRIGORIFIQUE MÉNAGER POURVU D'UN ÉLÉMENT EN PLASTIQUE

(30) Priorität: 22.06.2009 DE 102009027075
(43) Veröffentlichungstag der Anmeldung: 02.05.2012
(73) Patentinhaber: BSH Bosch und Siemens Hausgeräte GmbH, 81739 München (DE)
(72) Erfinder: LAIBLE, Karl-Friedrich, 89129 Langenau (DE)
(86) Internationale Anmeldenummer: PCT/EP2010/058280
(87) Internationale Veröffentlichungsnummer: WO 2010/149513

(56) Entgegenhaltungen:
- WO-A1-99/13280
- GB-A- 1 467 635
- US-A- 3 907 193
- US-A- 4 030 870

## Beschreibung

Die Erfindung betrifft ein Haushaltskältegerät nach dem Oberbegriff des Patentanspruches 1.

Bei Haushaltskältegeräten ist der Kühlraum durch einen Gerätekorpus sowie eine Gerätetür begrenzt, die jeweils als Hohlkörper realisiert sind, deren Hohlräume mit einem Wärmeisolierschaum gefüllt sind. Die äußeren Begrenzungswände der Hohlräume sind üblicherweise aus einem Stahlblech hergestellt. Stahlblech kann fertigungstechnisch einfach im Biegeverfahren bearbeitet werden. Außerdem kann durch Stahlblech-Begrenzungswände verhindert werden, dass Wasserdampf aus der Umgebungsluft in den Wärmeisolierschaum beziehungsweise Gas (N₂, O₂, CO₂) aus dem Wärmeisolierschaum diffundiert, wodurch der Wärmeisolierschaum frühzeitig altern würde.

Als kostengünstige Alternative zum Einsatz von Stahlblechteilen können in einem gattungsgemäßen Haushaltsgerät Kunststoffbauteile verwendet werden. Die Kunststoffbauteile, etwa aus großflächigen, ebenen Kunststoffplatinen, können in einem Biegevorgang um eine Biegekante gebogen werden. Für ein einwandfreies Biegeverhalten ist es dabei erforderlich, den Biegevorgang unter Wärmebeaufschlagung des Kunststoffbauteiles durchzuführen.

Im Unterschied zur Biegung von Stahlblechteilen erfolgt daher der Biegevorgang bei Kunststoffplatinen unter Wärmebeaufschlagung. So ist aus der DE 691 14 098 T2 ein Verfahren zum Biegen eines Laminates bekannt, das aus zwei Metalllagen mit zwischengeordnetem thermoplastischen Kunststoffmaterial besteht. Das Laminat wird in dem Biegeverfahren zunächst erwärmt und dann gebogen. Dabei bewirkt die Erwärmung eine das Biegeverhalten optimierende Erweichung von zumindest den Grenzbereichen des zwischengeordneten Kunststoffmaterials. Aus der EP 0 456121 A1 ist ein Verfahren zum Biegen von plattenförmigen Werkstücken aus einem thermoplastischen Verbundwerkstoff bekannt. Das Werkstück wird im Bereich der Biegezone bis zur Plastifizierung erhitzt und dann gebogen. Dabei wird das Werkstück von der vorgesehenen Innenseite der Biegezone her sowie auf die Biegezone begrenzt erhitzt. Aus der EP 1 916 090 A1 ist ein weiteres Verfahren zum Herstellen eines Kunststoffbauteiles bekannt, bei dem das Kunststoffbauteil für den Biegevorgang nur in den vorbestimmten Biegebereichen erwärmt wird.

Aus dem oben genannten Stand der Technik geht hervor, dass lediglich die Biegezone erwärmt wird, während daran angrenzende Bereiche der Kunststoffplatine nicht erwärmt werden. Hierbei ergibt sich die Problematik, dass Wärme von der Biegezone in die angrenzenden Bereiche abgeleitet werden kann. Damit durch die Wärmeableitung das Biegeergebnis nicht beeinträchtigt wird, muss das Erwärmen entsprechend energieaufwendig ausgelegt werden sowie der zu erwärmende Bereich entsprechend groß bemessen sein.

Aus der US 4 030 870 A ist ein gattungsgemäßes Kältegerät bekannt, das ein Kunststoffbauteil aufweist, welches in einen Biegevorgang unter Wärmebeaufschlagung an Biegekanten gebogen wird. Gleiches trifft auch für die aus der GB 1 467 635 A und aus der WO 99/13280 A1 bekannten Kältegeräte zu.

Die Aufgabe der Erfindung besteht darin, ein Haushaltsgerät bereitzustellen, das fertigungstechnisch einfach herstellbar ist.

Die Aufgabe ist durch die Merkmale des Patentanspruches 1 gelöst. Bevorzugte Weiterbildungen der Erfindung sind in den Unteransprüchen offenbart.

Bei einem Haushaltsgerät mit einem Kunststoffbauteil, das in einem Biegevorgang unter Wärmebeaufschlagung um zumindest eine Biegekante biegbar ist, weist erfingdungsgemäß dieses thermoplastische Kunststoffbauteil im Bereich der zu formenden Biegekante zumindest eine Wärmeschwelle auf. Mit der Wärmeschwelle wird erfingdungsgemäß die Wärmeleitfähigkeit des Kunststoffbauteils im Bereich der Biegekante zumindest teilweise reduziert. Dadurch kann bei einmal erwärmter Biegezone die Wärme zeitlich länger in der Biegezone gehalten werden, wodurch das Biegeverhalten des Kunststoffbauteils positiv beeinflusst wird.

Unter Haushaltsgerät wird hier ein Gerät zur Haushaltsführung verstanden, insbesondere ein Haushaltskältegerät (kurz Kältegerät genannt), wie beispielsweise ein Kühlschrank, ein Gefrierschrank, eine Gefriertruhe, ein Weinlagerschrank oder eine Kühlgefrierkombination. Das Kunststoffbauteil ist eine Begrenzungswand zur Begrenzung eines mit einem Wärmeisolierschaum gefüllten Hohlraums solch eines Kältegeräts.

Die erfindungsgemäße Wärmeschwelle ist außerdem für eine zielgerichtete energieeffiziente Erwärmung des Kunststoffbauteils für den Biegevorgang von Bedeutung. Mittels der Wärmeschwelle kann nämlich bei der Erwärmung des Kunststoffbauteils eine Wärmeableitung aus dem Bereich der Biegekante heraus zumindest teilweise reduziert werden. Die Erwärmung kann somit im Wesentlichen nur auf die Biegezone beschränkt sein, während daran angrenzende Bereiche des Kunststoffbauteiles weitgehend bei Normaltemperatur verbleiben können.

Das Kunststoffbauteil kann zusammen mit zusätzlichen Funktionsschichten einen Materialverbund bilden. In diesem Fall kann das Kunststoffmaterial als Trägerschicht zwischen Funktionsschichten angeordnet sein. Im Falle des erfindungsgemäßen Kältegerätes ist eine der Funktionsschichten eine Metallschicht, die als Diffusionssperre ein Ausdiffundieren von Gas aus dem Wärmeisolierschaum in die Umgebung verhindert. Auf der gegenüberliegenden Seite der Begrenzungswand kann das Kunststoffbauteil eine Deckschicht aufweisen, etwa eine Kratzschutzfolie oder eine Dekorfolie.

Für das Biegeergebnis ist es dabei von Vorteil, dass die erfindungsgemäße Wärmeschwelle unmittelbar in der im Vergleich zu den anderen Schichten im Material verbund gut wärmeleitenden Metallschicht ausgebildet ist, um eine effektive barriere gegen die Wärmeableitung bereitzustellen.

Das Biegeverhalten kann weiter unterstützt werden, wenn die Biegezone des Kunststoffbauteiles vor dem Biegevorgang im Wesentlichen homogen erwärmt wird. Vor diesem Hintergrund kann sich bevorzugt die Wärmeschwelle zumindest teilweise, insbesondere vollständig entlang der Biegezone des Kunststoffbauteiles erstrecken.

Die Wärmeschwelle ist als eine Ausnehmung ausgebildet, die oberflächenseitig in das Kunststoffbauteil eingearbeitet ist. Die Ausnehmung ist bevorzugt unmittelbar in der wärmeleitenden Schicht des Kunststoffbauteils ausgebildet.

In einer einfachen Ausführungsform kann die Ausnehmung zumindest ein Trennschnitt sein, der das Material der wärmeleitenden Schicht insbesondere vollständig über seine Materialstärke hinweg durchtrennt. Ein solcher Trennschnitt kann beispielhaft durch ein Messer, etwa ein Glasschneider, in der wärmeleitenden Schicht erzeugt werden.

Bevorzugt kann die als Wärmeschwelle wirkende Ausnehmung beidseitig der Biegekante vorgesehen sein. Die Biegezone ist somit in Querrichtung zur Längserstreckung der zu bildenden Biegekante durch die beiden Ausnehmungen begrenzt, die insbesondere parallel zur Biegekante verlaufen können.

Auf diese Weise ist zwischen den beiden parallel zur Biegekante verlaufenden Ausnehmungen ein vom übrigen Material der wärmeleitenden Schicht abgetrennter Streifen gebildet, der die Biegezone beziehungsweise die zu bildende Biegekante vollflächig überdeckt. Dadurch wird im Erwärmungsschritt, der dem Biegevorgang vorgeschaltet ist, eine homogene Wärmeverteilung entlang der Biegezone unterstützt.

Bei dem Verfahren zur Herstellung des Kunststoffbauteiles kann somit vor der Durchführung der Erwärmung der Biegezone zunächst die zumindest eine Wärmeschwelle in den Bereich der Biegezone eingebracht werden. Anschließend kann die Biegezone erwärmt werden, um darauffolgend den Biegevorgang durchzuführen.

Die Erwärmung der Biegezone kann über Wärmebestrahlung des Kunststoffbauteiles erfolgen. Dabei kann das Kunststoffbauteil an seiner nach dem Biegevorgang innenliegenden Seite, und somit unmittelbar an seiner wärmeleitenden Schicht erwärmt werden. In diesem Fall wird die auf der abgewandten Seite des Kunststoffbauteils gegebenenfalls angeordnete Deckschicht nicht übermäßig mit Wärme beaufschlagt, so dass eine thermische Beschädigung der außen liegenden Deckschicht vermieden werden kann.

Um die Barrierenwirkung der als Wärmeschwelle ausgeführten Ausnehmung weiter zu verstärken, kann die in der wärmeleitenden Schicht gebildete Ausnehmung über eine vorgegebene freie Spaltbreite das Kunststoffmaterial der, die wärmeleitende Schicht tragenden Kunststoffplatine freilegen. Alternativ dazu kann die gesamte, zu erwärmende Biegezone von der wärmeleitenden Schicht freigelegt sein.

Zur Unterstützung einer Wärmeabsorption bei der Wärmebestrahlung kann die mit Wärmestrahlung beaufschlagte Seite des Kunststoffbauteils mit einer wärmeabsorbierenden Oberfläche versehen sein, insbesondere etwa eine schwarze Beschichtung. Bevorzugt kann diese schwarze Beschichtung beispielhaft auf der wärmeleitenden Schicht aufgebracht werden. In diesem Fall wird einerseits eine Wärmeableitung zu angrenzenden Bereichen mittels der Wärmeschwelle verhindert. Andererseits kann die Wärmeaufnahme durch die schwarze Beschichtung - im Vergleich zu angrenzenden Bereichen - erhöht werden.

Nachfolgend sind drei Ausführungsbeispiele der Erfindung anhand der beigefügten Figuren beschrieben.

Es zeigen:
- Fig. 1: in einer grob schematischen Schnittdarstellung ein Haushaltskältegerät;
- Fig. 2: eine vergrößerte Teilansicht in der Schnittebene I-I aus der Fig. 1;
- Fig. 3: in einer perspektivischen Teilansicht eine Biegekante sowie daran angrenzende Bereiche einer Begrenzungswand;
- Fig. 4: Verfahrensschritte zur Herstellung einer Begrenzungswand des Kältegerätes;
- Fig. 5: in einer Ansicht entsprechend der Fig. 4 ein zweites Ausführungsbeispiel der Erfindung; und
- Fig. 6: in einer Ansicht entsprechend der Fig. 4 ein drittes Ausführungsbeispiel der Erfindung.

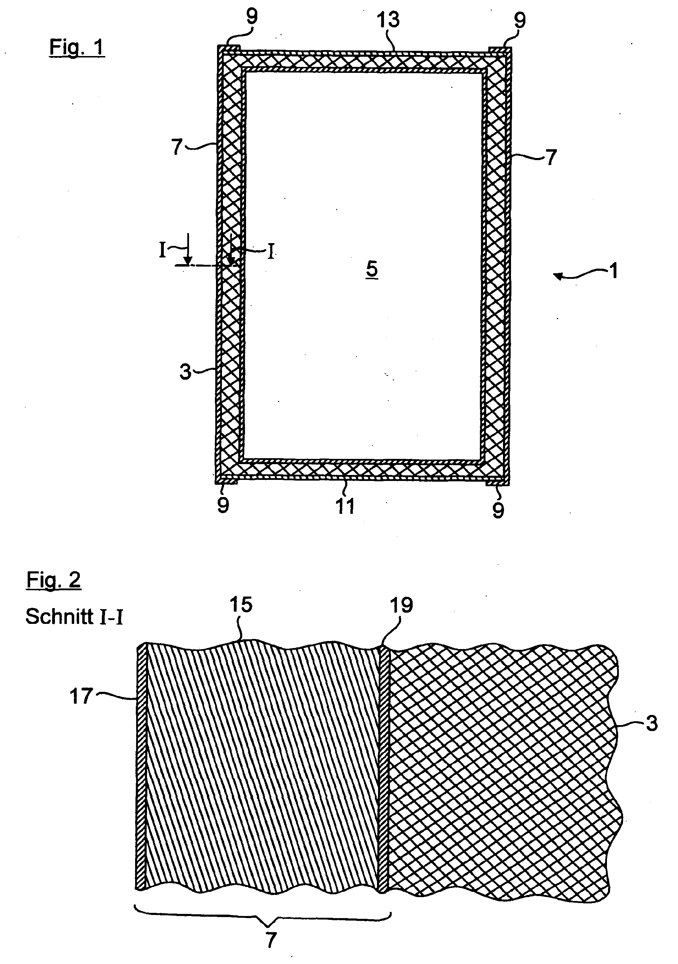

In der Fig. 1 ist ein Kältegerät mit einem Korpus 1 gezeigt, der als ein, mit einem Wärmeisolierschaum 3 ausgefüllter Hohlkörper realisiert ist. Der Korpus 1 begrenzt einen Kühlraum 5, der wiederum frontseitig durch eine nicht gezeigte Gerätetür verschließbar ist.

Wie aus der Fig. 1 weiter hervorgeht, weist der Korpus 1 äußere Begrenzungswände 7 auf, die an ihren oberen und unteren Enden mit abgekanteten Befestigungsflanschen 9 versehen sind. Die Befestigungsflansche 9 der äußeren Begrenzungswände 7 übergreifen jeweils eine Bodenwand 11 und eine Deckwand 13 des Korpus 1. Die Befestigungsflansche 9 können dabei zum Beispiel durch Verklebung mit den Boden- und Deckwänden 11, 13 verbunden sein.

In der Fig. 2 ist der Materialaufbau einer der äußeren Begrenzungswände 7 gezeigt. Demzufolge handelt es sich bei der Seitenwand 7 um eine großflächige, ebene Kunststoffplatine 15 aus thermoplastischem Kunststoff. Die Kunststoffplatine 15 dient als ein Träger für eine äußere Deckschicht 17, etwa eine aus Polypropylen oder PMMA gebildete Dekor- und/oder Kratzschutzfolie. Auf der, dem Wärmeisolierschaum 3 zugewandten Seite trägt die Kunststoffplatine 15 eine Diffusionssperrschicht 19, die im gezeigten Ausführungsbeispiel eine aufgeklebte Aluminiumfolie sein kann. Die Aluminiumfolie dient dabei als eine Diffusionssperre, die eine Diffusion von Luftfeuchtigkeit aus der Umgebungsluft in den Wärmeisolierschaum 3 und eine Diffusion von Gas (N₂, O₂, H₂) aus dem Wärmeisolierschaum 3 in die Umgebung verhindert.

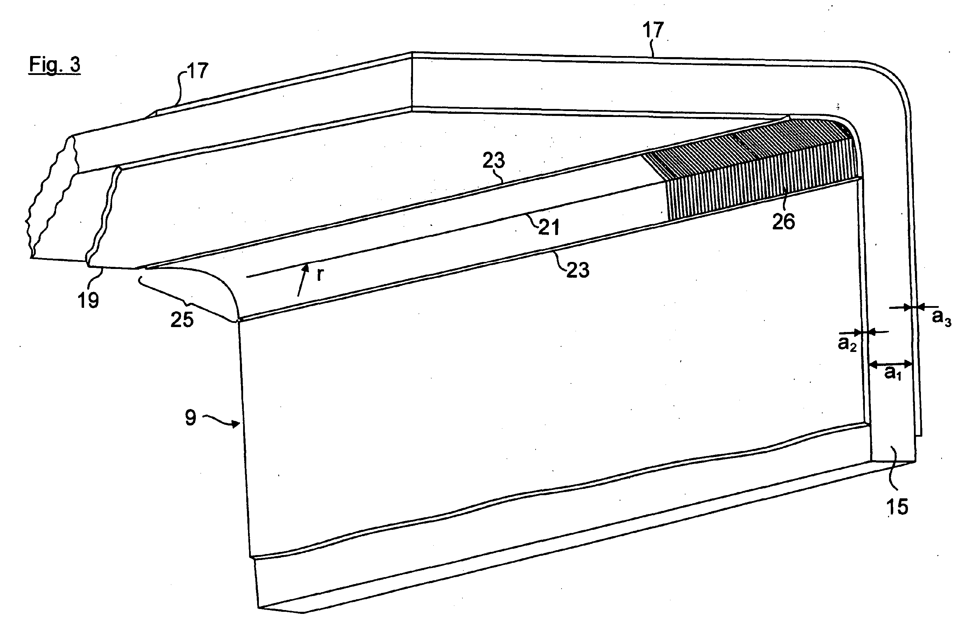

In der Fig. 3 ist die äußere Begrenzungswand 7 in Alleinstellung sowie in einer vergrößerten Teilansicht im Bereich ihres Befestigungsflansches 9 gezeigt. Darin ist der Dreischichtaufbau der Begrenzungswand 7 mit der inneren Diffusionssperrschicht 19 gezeigt, die in Einbaulage in Kontakt mit dem Wärmeisolierschaum 3 ist. Sowohl die innere Diffusionssperrschicht 19 als auch die äußere Dekorschicht 17 werden von der zwischengeordneten Kunststoffplatine 15 getragen.

Diese übernimmt in dem gezeigten Dreischichtaufbau die Tragfunktion und sorgt für eine Formstabilität der äußeren Begrenzungswand 7. Entsprechend ist die Kunststoffplatine 15 mit einer im Vergleich zu den Deck- und Diffusionssperrschichten 17, 19 stark vergrößerten Materialstärke a₁ im Bereich von 1,5 mm bemessen. Die Materialstärke a₂ der Diffusionssperrschicht 19 kann demgegenüber beispielhaft bei 0,009 mm, während die Materialstärke a₃ der Deckschicht 17 beispielhaft bei 0,150 mm liegt. Die Kunststoffplatine 15 kann weiterhin ist aus dem Kunststoff ABS gefertigt, während die Deckschicht 17 aus dem Kunststoff PMMA hergestellt ist, der einerseits der Deckschicht 17 eine gute Kratzschutzfunktion verleiht und andererseits etwa durch eine Schmelzverbindung mit großer Haftkraft unmittelbar mit der Kunststoffträger 15 aus ABS verbindbar ist.

Der Befestigungsflansch 9 geht gemäß Fig. 3 an einer linear verlaufenden Biegekante 21 mit vorgegebenem Biegeradius r in die großflächige Begrenzungswand über. Wie aus der Fig. 3 weiter hervorgeht, sind in einem Abstand von der Biegekante 21 zwei Trennschnitte 23 vorgesehen, die sich durchgehend sowie parallel entlang der Biegekante 21 erstrecken. Die Trennschnitte 23 durchtrennen das Material der Diffusionssperrschicht 19 vollständig, so dass im Bereich der Biegekante 21 ein von den angrenzenden Bereichen separater Streifen 25 der Diffusionssperrschicht 19 gebildet ist.

Jeder der beiden Trennschnitte 23 wirkt als eine Wärmeschwelle, mit der in dem nachfolgend beschriebenen Verfahren zur Herstellung der Begrenzungswand 7 eine Wärmeableitung aus dem Bereich der Biegekante 21 zu den angrenzenden Bereichen im Wesentlichen verhindert werden kann.

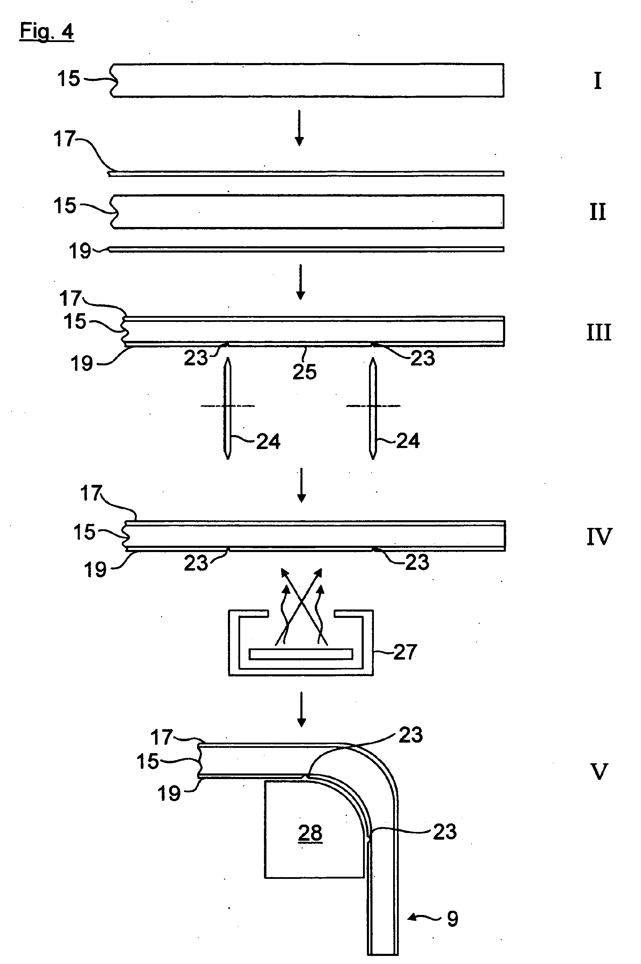

Das Verfahren zur Herstellung der Begrenzungswand 7 ist in der Fig. 4 veranschaulicht. Demzufolge wird im Verfahrensschritt I eine vollständig ebene Kunststoffplatine 15 bereitgestellt, die etwa durch Extrusion hergestellt ist. Im Verfahrensschritt II folgt ein Kaschieren der Kunststoffplatine 15, die beidseitig mit der äußeren Deckschicht 17 sowie der inneren Diffusionssperrschicht 19 verklebt wird.

Anschließend wird in den Verfahrensschritten III und IV ein Biegevorgang vorbereitet. Hierzu werden mit Hilfe von rotierenden Rollmessern 24 die beiden Trennschnitte 23 in die Diffusionssperrschicht 19 eingebracht. Der zwischen den Trennschnitten 23 gebildete Streifen 25 entspricht einer Biegezone, die im Verfahrensschritt IV durch einen angedeuteten Wärmestrahler 27 gezielt erwärmt wird. Zur Steigerung seiner Wärmeabsorptionsfähigkeit ist der Metallstreifen 25 mit einer Schwarzlackbeschichtung 26 überdeckt, die lediglich in der Fig. 3 angedeutet ist.

Mittels des Wärmestrahlers 27 wird im Verfahrensschritt IV gezielt der schwarz lackierte Streifen 25 angestrahlt. Dessen Wärmeabsorptionsfähigkeit ist gegenüber der ansonsten reflektierenden Oberfläche der Aluminiumfolie 19 stark erhöht.

Wie bereits erwähnt, wirken die beiden Trennschnitte 23 als Wärmeschwellen, die die Biegezone begrenzen und während des Erwärmungsschrittes IV sowie danach eine Wärmeableitung zu den angrenzenden Bereichen verhindern. Auf diese Weise kann mit reduziertem Energieaufwand sowie zielgerichtet nur auf den Streifen 25 die Wärmeenergie aufgebracht werden.

Im nachfolgenden Biegeschritt V kann die erwärmte Kunststoffplatine 15 auf ein nur angedeutetes Abkantwerkzeug 28 gelegt werden und der Befestigungsflansch 9 von der Kunststoffplatine 15 abgekantet werden.

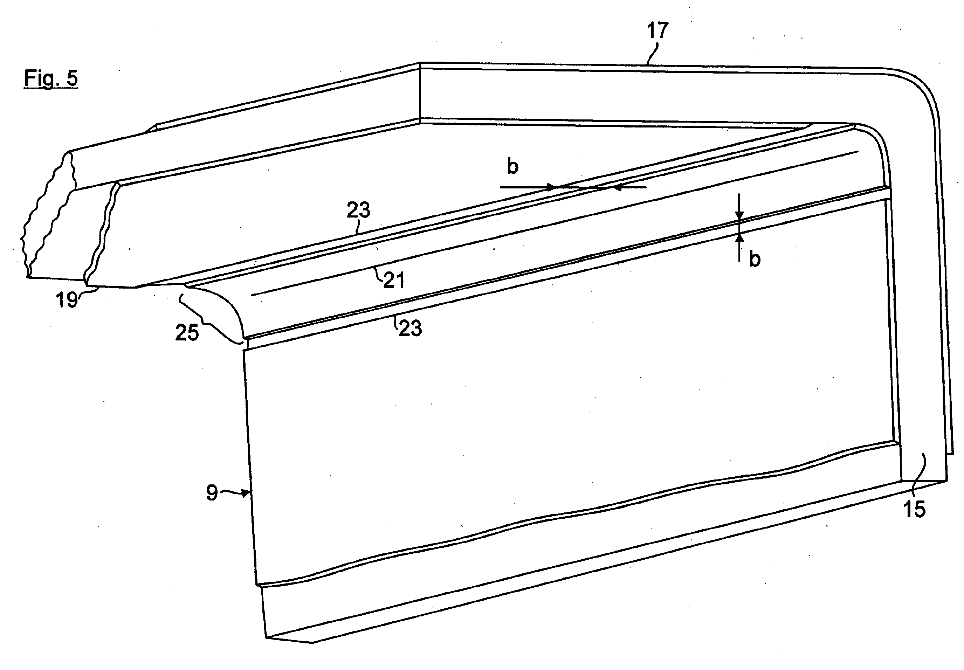

In der Fig. 5 ist die Begrenzungswand 7 gemäß dem zweiten Ausführungsbeispiel gezeigt. Der grundsätzliche Aufbau entspricht dabei dem der Begrenzungswand des ersten Ausführungsbeispiels, so dass funktionsgleiche Merkmale die selben Bezugsziffern aufweisen. Im Unterschied zur Fig. 3 sind in der Fig. 5 keine Trennschnitte als Wärmeschwellen 23 vorgesehen, die den Streifen 25 begrenzen. Zur Unterstützung der Barrierewirkung weist demgegenüber die Diffusionssperrschicht 19 als Wärmeschwellen 23 Ausnehmungen auf, die über eine freie Spaltbreite b die Oberfläche des Kunststoffmaterials der zwischengeordneten Kunststoffplatine 15 freilegen. Der die Biegekante 21 überdeckende Metallstreifen 25 ist somit über die Spaltbreite b von den angrenzenden Bereichen der Diffusionssperrschicht 19 beabstandet.

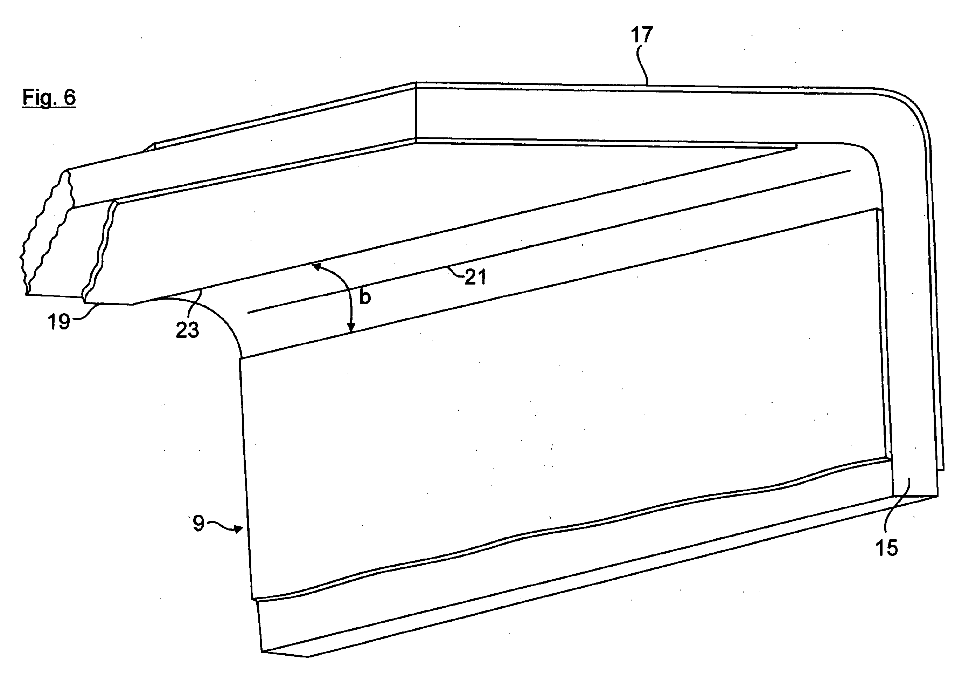

Im Unterschied dazu ist gemäß dem dritten Ausführungsbeispiel der Fig. 6 der Metallstreifen 25 im Bereich der Biegekante 21 vollständig entfernt, so dass hier in einem streifenförmigen Zwischenraum b das Kunststoffmaterial der Kunststoffplatine 15 freigelegt ist und mittels des Wärmestrahlers 27 angestrahlt werden kann. Der streifenförmige Zwischenraum b erstreckt sich somit über die Biegekante 21 des Kunststoffbauteils 7.

### BEZUGSZEICHENLISTE

| | |
|---|---|
| 1 | Korpus |
| 3 | Wärmeisolierschaum |
| 5 | Kühlraum |
| 7 | Begrenzungswand |
| 9 | Befestigungsflansch |
| 11 | Bodenwand |
| 13 | Deckwand |
| 15 | Kunststoffbauteil |
| 17 | Deckschicht |
| 19 | wärmeisolierende Schicht |
| 21 | Biegekante |
| 23 | Wärmeschwelle |
| 24 | Rollmesser |
| 25 | Streifen |
| 27 | Wärmestrahler |
| 28 | Abkantwerkzeug |
| I - V | Verfahrensschritte |
| a, b | Materialstärken |
| r | Biegeradius |
| b | Spaltbreite |

## Patentansprüche

1. Haushaltskältegerät mit einem Kunststoffbauteil (7), das eine Begrenzungswand zur Begrenzung eines mit einem Wärmeisolierschaum (3) gefüllten Hohlraums des Kältegeräts ist und das in einem Biegevorgang (V) unter Wärmebeaufschlagung um zumindest eine Biegekante (21) biegbar ist, **dadurch gekennzeichnet, dass** das Kunststoffbauteil (7) im Bereich der Biegekante (21) zumindest eine Wärmeschwelle (23) aufweist, mit der zur Verbesserung des Biegeverhaltens die Wärmeleitfähigkeit des Kunststoffbauteils (7) im Bereich seiner Biegekante (21) zumindest teilweise reduziert ist, dass das Kunststoffbauteil (7) eine wärmeleitende Metallschicht (19), etwa eine Aluminiumschicht, aufweist und dass die Wärmeschwelle (23) als eine Ausnehmung in der wärmeleitenden Metallschicht (19) ausgebildet ist.

2. Haushaltskältegerät nach Anspruch 1, **dadurch gekennzeichnet, dass** mittels der Wärmeschwelle (23) eine Wärmeableitung aus dem Bereich der Biegekante (21) des Kunststoffbauteils (15) verzögerbar ist.

3. Haushaltskältegerät nach einem der Ansprüche 1 oder 2, **dadurch gekennzeichnet, dass** sich die Wärmeschwelle (23) zumindest teilweise entlang der Biegekante (21) des Kunststoffbauteils (7) erstreckt.

4. Haushaltskältegerät nach Anspruch 1, 2 oder 3, **dadurch gekennzeichnet, dass** mittels der in der wärmeleitenden Schicht (19) gebildeten Ausnehmung (23) das Kunststoffmaterial des Kunststoffbauteils (15) über einen freien Abstand (b) freigelegt ist.

5. Haushaltskältegerät nach Anspruch 4, **dadurch gekennzeichnet, dass** die Ausnehmung (23) als ein Trennschnitt ausgebildet ist.

6. Haushaltskältegerät nach Anspruch 3, 4 oder 5, **dadurch gekennzeichnet, dass** beidseitig der Biegekante (21) eine Ausnehmung (23) angeordnet ist, die insbesondere im Wesentlichen parallel zur Biegekante (21) verlaufen.

7. Haushaltskältegerät nach Anspruch 6, **dadurch gekennzeichnet, dass** zwischen den Ausnehmungen (23) ein Streifen (25) der wärmeleitenden Schicht (19) ausgebildet ist, der die Biegekante (21) vollflächig überdeckt.

8. Haushaltskältegerät nach einem der vorhergehenden Ansprüche, **dadurch gekennzeichnet, dass** das Kunststoffbauteil (7) im Bereich der Biegekante (21) mit einer wärmeabsorbierenden Oberfläche (26) ausgebildet ist, insbesondere eine schwarze Beschichtung.

9. Haushaltskältegerät nach einem der vorhergehenden Ansprüche, **dadurch gekennzeichnet, dass** die wärmeleitende Metallschicht (19) auf der dem Wärmelsolierschaum (3) zugewandten Seite der Begrenzungswand (7) angeordnet ist.

## Claims

1. Domestic refrigerating appliance with a plastics material component (7), which is a boundary wall for bounding a cavity, which is filled with a thermal insulating foam (3), of the refrigerating appliance and which is bendable in a bending process (V) about at least one bending edge (21) under the action of heat, **characterised in that** the plastics material component (7) has in the region of the bending edge (21) at least one heat threshold (23) by which for improvement of the bending behaviour the thermal conductivity of the plastics material component (7) is at least partly reduced in the region of its bending edge (21), that the plastics material component (7) has a thermally conductive metal layer (19), for example an aluminium layer, and that the heat threshold (23) is formed as a recess in the thermally conductive metal layer (19).

2. Domestic refrigerating appliance according to claim 1, **characterised in that** heat dissipation from the region of the bending edge (21) of the plastics material component (15) can be retarded by means of the heat threshold (23).

3. Domestic refrigerating appliance according to one of claims 1 and 2, **characterised in that** the heat threshold (23) extends at least partly along the bending edge (21) of the plastics material component (7).

4. Domestic refrigerating appliance according to claim 1, 2 or 3, **characterised in that** the plastics material of the plastics material component (15) is exposed over a free distance (b) by means of the recess (23) formed in the thermally conductive layer (19).

5. Domestic refrigerating appliance according to claim 4, **characterised in that** the recess (23) is formed as a separating cut.

6. Domestic refrigerating appliance according to claim 3, 4 or 5, **characterised in that** a recess (23), which extends, in particular, substantially parallel to the bending edge (21), is arranged on either side of the bending edge (21).

7. Domestic refrigerating appliance according to claim 6, **characterised in that** a strip (25) of the thermally conductive layer (19), which covers the bending edge (21) over the whole area, is formed between the recesses (23).

8. Domestic refrigerating appliance according to any one of the preceding claims, **characterised in that** the plastics material component (7) is formed in the region of the bending edge (21) with a heat-absorbing surface (26), particularly a black coating.

9. Domestic refrigerating appliance according to any one of the preceding claims, **characterised in that** the thermally conductive metal layer (19) is arranged on the side of the boundary wall (7) facing the thermally insulating foam (3).

## Revendications

1. Appareil frigorifique à usage domestique comprenant un élément en matière plastique (7) qui est une paroi de délimitation destinée à délimiter un espace creux de l'appareil frigorifique, rempli d'une mousse d'isolation thermique (3), et qui est pliable autour d'au moins une arête de pliage (21) au cours d'une opération de pliage (V) sous application de chaleur, **caractérisé en ce que** l'élément en matière plastique (7) présente au moins une barrière thermique (23) dans la partie de l'arête de pliage (21), au moyen de laquelle barrière thermique la conductibilité thermique de l'élément en matière plastique (7) est au moins en partie réduite dans la partie de son arête de pliage (21) pour améliorer le comportement au pliage, **en ce que** l'élément en matière plastique (7) présente une couche métallique thermoconductrice (19), par exemple une couche d'aluminium, et **en ce que** la barrière thermique (23) est réalisée en tant qu'un évidement dans la couche métallique thermoconductrice (19).

2. Appareil frigorifique à usage domestique selon la revendication 1, **caractérisé en ce qu'**une dissipation de chaleur hors de la partie de l'arête de pliage (21) de l'élément en matière plastique (15) peut être retardée au moyen de la barrière thermique (23).

3. Appareil frigorifique à usage domestique selon la revendication 1 ou 2, **caractérisé en ce que** la barrière thermique (23) s'étend au moins en partie le long de l'arête de pliage (21) de l'élément en matière plastique (7).

4. Appareil frigorifique à usage domestique selon les revendications 1, 2 ou 3, **caractérisé en ce que** la matière plastique de l'élément en matière plastique (15) est dégagée au-dessus d'un écart libre (b) au moyen de l'évidement (23) formé dans la couche thermoconductrice (19).

5. Appareil frigorifique à usage domestique selon la revendication 4, **caractérisé en ce que** l'évidement (23) est réalisé en tant qu'une couche de séparation.

6. Appareil frigorifique à usage domestique selon les revendications 3, 4 ou 5, **caractérisé en ce qu'**un évidement (23) est disposé de chaque côté de l'arête de pliage (21), lesquels évidements s'étendent notamment essentiellement parallèlement à l'arête de pliage (21).

7. Appareil frigorifique à usage domestique selon la revendication 6, **caractérisé en ce qu'**une bande (25) de la couche thermoconductrice (19) est réalisée entre les évidements (23), laquelle recouvre l'arête de pliage (21) sur toute sa surface.

8. Appareil frigorifique à usage domestique selon l'une quelconque des revendications précédentes, **caractérisé en ce que** l'élément en matière plastique (7) est réalisé dans la partie de l'arête de pliage (21) avec une surface absorbant la chaleur (26), notamment un revêtement noir.

9. Appareil frigorifique à usage domestique selon l'une quelconque des revendications précédentes, **caractérisé en ce que** la couche métallique thermoconductrice (19) est disposée sur la paroi de délimitation (7) tournée vers la mousse d'isolation thermique (3).
